# EUROPÄISCHE PATENTSCHRIFT

(11) **EP 2 179 280 B1**
(45) Veröffentlichungstag und Bekanntmachung des Hinweises auf die Patenterteilung: **22.11.2017**
(21) Anmeldenummer: 08760283.5
(22) Anmeldetag: 30.05.2008
(51) Int. Cl.: G01N 29/24

(54) **ULTRASCHALL-PRÜFVORRICHTUNG MIT VERBESSERTER AUSRICHTUNG**
ULTRASOUND TEST DEVICE WITH IMPROVED ALIGNMENT
DISPOSITIF DE CONTRÔLE PAR ULTRASONS À ALIGNEMENT AMÉLIORÉ

(30) Priorität: 20.08.2007 DE 102007039326
(43) Veröffentlichungstag der Anmeldung: 28.04.2010
(73) Patentinhaber: GE Inspection Technologies GmbH, 50354 Hürth (DE)
(72) Erfinder: MEINERT, Damian, 40764 Langenfeld (DE); PRAUSE, Reinhard, 53757 St. Augustin (DE); VIERHAUS, Rainer, 50259 Puhlheim (DE)
(74) Vertreter: Patentanwälte Bauer Vorberg Kayser
(86) Internationale Anmeldenummer: PCT/EP2008/056695
(87) Internationale Veröffentlichungsnummer: WO 2009/024365

(56) Entgegenhaltungen:
- FR-A- 1 065 907
- US-A- 3 129 581
- US-A- 3 257 843
- US-A- 3 938 371
- US-A- 3 938 372
- US-A- 4 472 975
- US-A1- 2004 016 299

## Beschreibung

Die vorliegende Erfindung betrifft eine Ultraschall-Prüfvorrichtung für die Prüfung von rohrförmigen Werkstücken, die mittels eines Fluids an das Werkstück ankoppelbar ist. Das Werkstück bzw. Rohr dreht sich dann um seine Längsachse und wird geprüft. Alternativ sind aber auch Ultraschall-Prüfvorrichtungen bekannt, die sich selbst bewegen, während das Werkstück bzw. Rohr ortsfest bleibt. Zur Schallaussendung weisen Ultraschall-Prüfvorrichtungen so genannte Schwingereinheiter mit einem Sender und ggfs. auch einem Empfänger auf, der Empfänger kann aber auch an anderer Stelle untergebracht sein.
Die Prüfung rohrförmiger Werkstücke ist u.a. deshalb sehr anspruchsvoll, weil eine ausreichende und störungsfreie Ankopplung der Ultraschall-Prüfvorrichtung schwieriger ist. Weiterhin ist die Intensität der empfangenen Signale sehr stark von der Oberflächengeometrie abhängig, weswegen in der DE 27 40 106 sogar ein Prüfkopf vorgeschlagen wird, der mittels einer Schallschwächungsmessung die Ausrichtung zweier weiterer, außenliegender Prüfköpfe entsprechend der Oberflächengeometrie des zu prüfenden Werkstücks bestimmt. Diese Vorrichtung bzw. das zugrunde liegende Verfahren ist aufwendig und kostenintensiv.

Artverwandte Prüfungsvorrichtungen sind weiterhin aus US 3,938,372 und US4,472,975 bekannt.

Aus der DE 27 51 810 ist eine Prüfvorrichtung zum zerstörungsfreien Prüfen bekannt, bei der in einer Prüfspinne insgesamt sechs Prüfköpfe angeordnet sind, deren Schallstrahlen sich in einem Punkt schneiden. Die schallübertragende Ankopplung erfolgt durch Zufuhr von Wasser in die Berührungsebene. Nachteilig bei dieser Anordnung ist, dass das Koppelmedium in unkontrollierter Weise zugeführt wird, der Aufwand für die Ankoppelkontrolle ist somit sehr hoch. Insbesondere ist aber auch von Nachteil, dass die Anpassung an verschiedene Rohrdurchmesser und auch die Einstellung des Einschallwinkels umständlich ist.

Die Aufgabe der vorliegenden Erfindung besteht darin, eine Ultraschall-Prüfvorrichtung zu schaffen, mit der eine möglichst schnelle und genaue Prüfung von rohrförmigen Werkstücken möglich ist. Die Ultraschall-Prüfvorrichtung soll dabei möglichst einfach aufgebaut und zu bedienen, sowie für verschiedene Prüftechniken einsetzbar sein. Insbesondere soll die Einhaltung eines möglichst konstanten Einschallwinkels durch den Benutzer einfach zu bewerkstelligen sein.

Erfindungsgemäß wird die Aufgabe durch eine Ultraschall-Prüfvorrichtung mit den Merkmalen des Anspruchs 1 gelöst.

Bei der erfindungsgemäßen Ultraschall-Prüfvorrichtung ist demnach die Schwingereinheit exakt um den Einschallpunkt auf der Mantelfläche schwenkbar. Dadurch wird erreicht, dass der Einschallpunkt auf der Mantelfläche auch beim Verschwenken der Schwingereinheit exakt eingehalten wird, da die Schwenklinie genau dem Kreisbogen entspricht, dessen Mittelpunkt durch den Einschallpunkt auf der Mantelfläche gebildet ist.

Die Ultraschall-Prüfvorrichtung weist ein Clustergehäuse auf, das auf der äußeren Mantelfläche des Werkstücks, also auf der Rohroberfläche, mit einer durchmesserangepassten Schleißsohle abschließt. Dadurch bildet sich eine Kammer zur Aufnahme des Koppelmediums, vorzugsweise Wasser. Die Kammer wird nicht, wie im Stand der Technik bekannt, von oben nach unten zu befüllt, sondern es ist vielmehr eine Befüllung ausgehend von der äußeren Mantelfläche des Werkstücks vorgsehen. Das Fluid wird also nahe der äußeren Mantelfläche der Kammer zugeführt und steigt dann im Clustergehäuse auf. Durch diese vorteilhafte Zuführung wird erreicht, dass evtl. auftretende Luftblasen mit dem Fluid nach oben steigen und somit deutlich schneller und ohne Verwirbelungen abgeführt werden. Bei Prüfvorrichtungen nach dem Stand der Technik ist gerade dies nicht der Fall, üblicherweise strömt das Fluid den aufsteigenden Luftblasen von oben entgegen.

Entsprechende Fluideinlassöffnungen konstruktiv derart ausgeführt sein, dass der Fluidstrahl durch mindestens einen Kanal senkrecht auf die Rohroberfläche geleitet wird. Die Kammer wird dann von der Rohroberfläche beginnend, in Anlehnung an die Prüfkopfzeilenlänge gleichmäßig von unten nach oben blasenfrei geflutet.

Mindest ein Fluidausleitkanal dient dem Entlüften und Entwässern der Kammer und mündet vorzugsweise seitlich oder oberhalb der Schwingereinheit, insbesondere oberhalb der Prüfköpfe an einer Fluidausleitöffnung. Strömungstechnisch lässt sich so eine Luftblasenbildung vor der Schwingereinheit, also zwischen dem Werkstück und den Prüfköpfen vermeiden. Die Anzahl der Fluidausleitkanäle und Fluidausleitöffnungen kann individuell an die Prüfkopfzeilenlänge bzw. die Anzahl der einzelnen Prüfköpfe angepasst werden.
Das Clustergehäuse kann erfindungsgemäß für konventionelle oder Phased-Array Technik ausgeführt sein. Eine große Kammer eignet sich insbesondere auch für eine Phased Array Prüftechnik mit so genannter Paintbrush-Methode innerhalb des Clustergehäuses. Erfindungsgemäß ist das Clustergehäuse in einen Kontaktkörper und ein Schwingereinheitgehäuse unterteilt. Der Kontaktkörper schließt an die Schleißsohle an, das Schwingereinheitgehäuse beinhaltet den Schwingkörper und ist gegenüber dem Kontaktkörper schwenkbar gelagert. Die Kammer erstreckt sich durch den Kontaktkörper bis in das Schwingereinheitgehäuse hinein. Die Schwenklinie der Schwingereinheit ist in einem bevorzugten Ausführungsbeispiel durch die Außenkontur des Kontaktkörpers gebildet.
Mit Hilfe von Distanzstücken ist eine Erhöhung des Clustergehäuses und damit ein größerer Abstand der Schwingereinheit zur Mantelfläche des Werkstücks realisierbar. Zu diesem Zweck ist das Schwingereinheitgehäuse unterteilt.
Der Kontaktkörper weist also in Richtung des Schwingereinheitgehäuses eine konvexe Wölbung auf. Das Schwingereinheitgehäuse ist an seiner Unterseite, also an der Seite, die mit dem Kontaktkörper in Kontakt kommt, entsprechend konkav gewölbt eingeführt.
Zur Reproduzierbarkeit der Prüfeinstellung kann der Einschallwinkel in verschiedenen Winkellagen mechanisch fixiert, das Schwingereinheitgehäuse also gegenüber dem Kontaktkörper festgesetzt werden.
Es hat sich als vorteilhaft erwiesen, wenn nicht nur eine Fluideinleitlöffnung vorgesehen ist, sondern das Fluid durch mehrere Öffnungen gleichmäßig in die Kammer eingeleitet wird.

Die konkav gewölbte Schleißsohle ist auswechselbar ausgeführt, so dass die Prüfvorrichtung an verschiedene Durchmesser anpassbar ist.

Anhand der nachfolgenden Figuren wird die Erfindung näher erläutert. Das darin beschriebene Ausführungsbeispiel ist lediglich beispielhaft zu verstehen und soll den Umfang der Erfindung nicht beschränken. Es zeigen:
- Fig. 1:: Eine erfindungsgemäße Ultraschall-Prüfvorrichtung in Vorderansicht,
- Fig. 2:: die Ultraschall-Prüfvorrichtung aus Figur 1 in Seitenansicht,
- Fig. 3:: eine Prinzipdarstellung der Winkelverstellung.

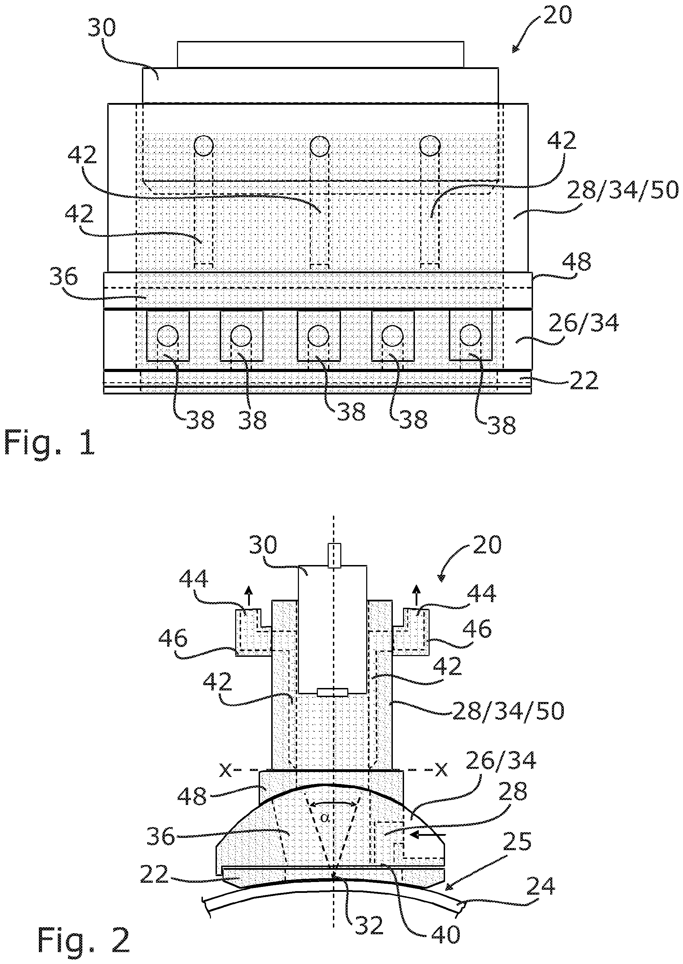

Die Figuren 1 und 2 zeigen eine erfindungsgemäße Ultraschall-Prüfvorrichtung 20. Diese weist eine Schleißsohle 22 auf, die je nach Durchmesser eines zu prüfenden Werkstücks 24 eine konkave Wölbung aufweist, die an das zu prüfende Werkstück 24 anschließt. Die Schleißsohle 22 ist austauschbar, der Grad der Wölbung ist also an verschiedene Rohrdurchmesser bzw. äußere Mantelflächen 25 anpassbar.

Im gezeigten Ausführungsbeispiel ist die Schleißsohle 22 an einem Kontaktkörper 26 angeordnet, an den wiederum ein Schwingereinheitgehäuse 28 anschließt. Innerhalb des Schwingereinheitgehäuses 28 ist eine Schwingereinheit 30 gezeigt, die die notwendigen Sender und Empfängermodule beinhaltet. Der schall trifft unter einem Winkel α auf einen Einschallpunkt, er beträgt beispielsweise 19°. Das Schwingereinheitgehäuse 28 ist gegenüber dem Kontaktkörper 26 verschwenkbar ausgeführt. Im gezeigten Ausführungsbeispiel ist zu diesem Zweck der Kontaktkörper 26 auf seiner dem Schwingereinheitgehäuse 28 zugewandten Seite konvex ausgeführt, wohingegen das Schwingereinheitgehäuse 28 eine damit korrespondierende konkave Wölbung aufweist.

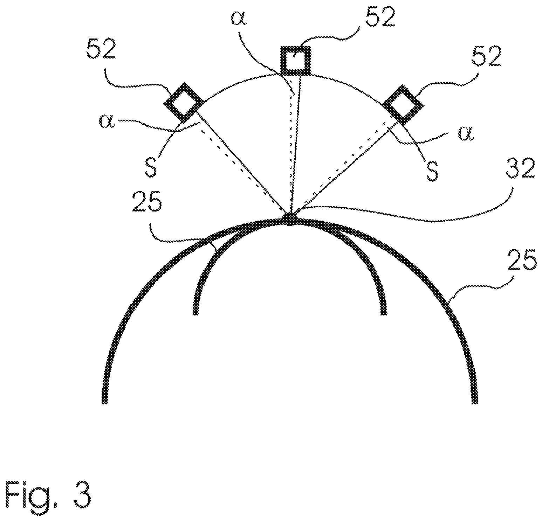

Die konkave bzw. konvexe Wölbung des Kontaktkörpers 26 und des Schwingereinheitgehäuses 28 sind derart ausgeführt, dass die sich daraus ergebende Schwenklinie S-S einem Kreisbogen entspricht, dessen Mittelpunkt durch den Einschallpunkt 32, der auf der Mantelfläche 25 des Werkstücks 24 liegt, gebildet ist. Im gezeigten Ausführungsbeispiel steht das Schwingereinheitgehäuse 28 senkrecht auf dem Kontaktkörper 26, es kann aber sowohl nach rechts als auch nach links verschwenkt werden. Die Festlegung der Schwenklinie S-S als Kreisbogen des Einschallpunkts 32 bewirkt, dass der Schall stets genau am Einschallpunkt 32 unter dem gleichen Einschallwinkel α auftrifft, unabhängig vom Grad der Verschwenkung (vergl. auch Figur 3).

Der Kontaktkörper 26 und das Schwingereinheitgehäuse 28 bilden ein Clustergehäuse 34 aus, in dem sich eine Kammer 36 befindet. Die Kammer 36 schließt an das Werkstück 24 an bzw. ist in Richtung des Werkstücks 24 geöffnet, um eine Ankopplung mittels eines Fluids bewirken zu können.

Die Kammer 36 ist über einen Fluideinleitkanal 38 befüllbar, der mit einer Fluideinleitöffnung 40 in der Kammer 36 mündet. Der Fluideinleitkanal 38 ist dabei vorzugsweise derart ausgeführt, dass das Fluid möglichst senkrecht auf die äußere Mantelfläche 25 des Werkstücks 24 geleitet wird. Figur 1 verdeutlicht, dass auch mehrere Fluideinleitkanäle 38, im gezeigten Ausführungsbeispiel fünf, vorgesehen sein können. Über die Fluideinleitkanäle 38 wird die Kammer 36 ausgehend von der Mantelfläche 25 des Werkstücks 24 geflutet, das Fluid steigt in der Kammer 36 nach oben und wird in Fluidausleitkanäle 42 geleitet. Die Fluidausleitkanäle 42 münden in Fluidausleitöffnungen 44, die das Fluid aus dem Clustergehäuse 34 bzw. aus der Ultraschall-Prüfvorrichtung 20 ausleiten. Im gezeigten Ausführungsbeispiel sind kaminförmige Fluidausleitkanalendungen 46 vorgesehen, die das Fluid von der Schwingereinheit 30 weg und oberhalb nicht gezeigter Prüfköpfe ableiten. Die Fluidausleitkanalendungen 46 sind außen am Clustergehäuse 34 angeordnet und stehen von diesem ab. Anzahl und Verlauf der Fluidausleitkanäle 42 und der Fluidausleitkanalendungen 46 sind je nach Anforderungen und konstruktiven Voraussetzungen frei wählbar.

Nicht gezeigt sind Distanzelemente, die in ein teilbares Clustergehäuse 34 eingesetzt werden können. Insbesondere in Figur 2 ist erkennbar, dass das Schwingereinheitgehäuse 28 in einen Aufsatzgehäuseabschnitt 48, der auf den Kontaktkörper 26 aufsetzt, und einen sich daran anschließenden oberen Gehäuseabschnitt 50 aufgeteilt ist. Diese beiden Gehäuseabschnitte 48, 50 stehen entlang einer Trennlinie x-x in Kontakt. Distanzstücke oder Elemente können beispielsweise zwischen den Aufsatzgehäuseabschnitt 48 und den oberen Gehäuseabschnitt 50 eingesetzt werden, wodurch der Abstand der Schwingereinheit 30 zum Werkstück 24 bzw. zum Einschallpunkt 32 variierbar ist.

Figur 3 verdeutlicht die geometrischen Zusammenhänge der erfindungsgemäßen Winkelverstellung der Ultraschallprüfvorrichtung 20. Gezeigt sind äußere Mantelflächen 25 zweier Werkstücke 24 mit unterschiedlichen Durchmessern. Der gewünschte Einschallpunkt 32 liegt auf diesen äußeren Mantelflächen 25. Weiterhin ist ein Prüfkopf 52 in drei unterschiedlichen Positionen gezeigt. Weiterhin ist die Schwenklinie S-S eingezeichnet, auf der der Prüfkopf 52 verschwenkbar ist. Der der Schwenklinie S-S zugehörige Mittelpunkt ist der Einschallpunkt 32. Somit weist der Prüfkopf 52 in jeder Position auf der Schwenklinie S-S den gleichen Abstand und den gleichen Winkel zum Einschallpunkt 32 auf, wodurch die Prüfung von Werkstücken 24 unterschiedlicher Durchmesser schnell und einfach unter Beibehaltung der gewünschten Einstellwinkel durchgeführt werden kann.

Die erfindungsgemäße Ultraschall-Prüfvorrichtung 20 eignet sich zur Realisierung verschiedener Prüftechniken, z.B. zur Winkeleinschallung, auch wird bei Nutzung unterschiedlicher Distanzstücke der Einschallwinkel stets beibehalten.

## Patentansprüche

1. Ultraschall-Prüfvorrichtung (20) für die Prüfung von rohrförmigen Werkstücken (24), wobei
- die Ultraschall-Prüfvorrichtung (20) mittels eines Fluidmediums an das Werkstück (24) ankoppelbar ist, so dass von einer Schwingereinheit (30) ausgesendeter Schall auf einen Einschallpunkt (32) auf der Mantelfläche (25) des Werkstücks (24) auftrifft,
- das Werkstück (24) und die Ultraschall-Prüfvorrichtung (20) relativ zueinander bewegbar sind,
- die Schwingereinheit (30) auf einer Schwenklinie S-S, die einem Kreisbogen entspricht, dessen Mittelpunkt durch den Einschallpunkt (32) gebildet ist, schwenkbar ist,
**dadurch gekennzeichnet, dass**
- die Ultraschall-Prüfvorrichtung (20) eine Schleißsohle (22) beinhaltet, die dazu ausgeführt ist, um auf der äußeren Mantelfläche (25) des Werkstücks (24) aufzusetzen und an diese anzuschließen, wobei die Schleißsohle (22) auswechselbar ausgeführt ist, so dass die Ultraschall-Prüfvorrichtung (20) an verschiedene Durchmesser anpassbar ist,
- die Schwingereinheit (30) in jeder Position in Bezug auf den Einschallpunkt (32) zur Reproduzierbarkeit der Prüfeinstellung mechanisch fixierbar ausgeführt ist,
- die Ultraschall-Prüfvorrichtung (20) ein Clustergehäuse (34) aufweist, das in ein Schwingereinheitgehäuse (28) und einen Kontaktkörper (26) unterteilt ist, wobei der Kontaktkörper (26) an die Schleißsohle (22) anschließt und das Schwingereinheitgehäuse (28) die Schwingereinheit (30) beinhaltet und gegenüber dem Kontaktkörper (26) verschwenkbar ist,
- die Schleißsohle (22) derart ausgeführt ist, dass sich eine Kammer (36) zwischen Werkstück (24) und Schwingereinheit (30) ausbildet, und mindestens ein Fluideinleitkanal (38), der mit einer Fluideinleitöffnung (40) in die Kammer (36) mündet und mindestens ein Fluidausleitkanal (42) zum Entlüften und Entwässern der Kammer (36), der in die Kammer (36) mündet, vorgesehen sind, wobei die Mündung des Fluidausleitkanals (42) und der Fluidausleitkanal (42) derart ausgeführt und angeordnet sind, dass ein Auffüllen der Kammer (36) und des Fluidausleitkanals (42) beginnend an der äußeren Mantelfläche (25) des Werkstücks (24) und dann aufsteigend erfolgen kann.

2. Ultraschall-Prüfvorrichtung (20) nach Anspruch 1, **dadurch gekennzeichnet, dass** der Fluideinleitkanal (38) und die Fluideinleitöffnung (40) derart ausgeführt und angeordnet sind, dass das Fluid senkrecht auf die äußere Mantelfläche (25) des Werkstücks (24) eingeleitet wird.

3. Ultraschall-Prüfvorrichtung (20) nach Anspruch 1 bis 2, **dadurch gekennzeichnet, dass** der Fluidausleitkanal (42) eine Fluidausleitöffnung (44) aufweist, die in Bezug auf die Mantelfläche (25) oberhalb eines Prüfkopfs (52) der Schwingereinheit (30) angeordnet ist.

4. Ultraschall-Prüfvorrichtung (20) nach Anspruch 3, **dadurch gekennzeichnet, dass** der Fluidausleitkanal (42) eine Fluidausleitkanalendung (46) aufweist, die von dem Clustergehäuse (34) absteht.

5. Ultraschall-Prüfvorrichtung (20) nach einem der Ansprüche 1 bis 4, **dadurch gekennzeichnet, dass** mehrere Fluideinleitkanäle (38) vorgesehen sind.

6. Ultraschall-Prüfvorrichtung (20) nach einem der Ansprüche 1 bis 5, **dadurch gekennzeichnet, dass** mehrere Fluidausleitkanäle (42) vorgesehen sind.

7. Ultraschall-Prüfvorrichtung (20) nach einem der Ansprüche 1 bis 6, **dadurch gekennzeichnet, dass** der Abstand der Schwingereinheit (30) vom Einschallpunkt (32) mit Hilfe von Distanzstücken, die in das Clustergehäuse (34) einsetzbar sind, veränderbar ist.

8. Ultraschall-Prüfvorrichtung (20) nach einem der Ansprüche 1 bis 7, **dadurch gekennzeichnet, dass** die Schwingereinheit (30) mehrere Prüfköpfe (52) beinhaltet.

9. Ultraschall-Prüfvorrichtung (20) nach Anspruch 8, **dadurch gekennzeichnet, dass** die Kammer (36) Abmessungen aufweist, die eine Phased Array Prüftechnik erlaubt.

## Claims

1. An ultrasound inspection device (20) for the inspection of tubular workpieces (24), wherein
- the ultrasound inspection device (20) can be coupled to the workpiece (24) by means of a fluid medium, so that sound emitted from a transducer unit (30) hits an insonification point (32) on the lateral surface (25) of the workpiece (24),
- the workpiece (24) and the ultrasound inspection device (20) can be moved relative to each other,
- the transducer unit (30) is pivotable on a pivoting line S-S, which corresponds to an arc of a circle whose center is formed by the insonification point (32),
**characterized in that**
- the ultrasound inspection device (20) includes a wear sole (22) configured for being placed on the outer lateral surface (25) of the workpiece (24) and adjoining thereto, the wear sole (22) being configured to be replaceable, so that the ultrasound inspection device (20) can be adapted to different diameters,
- the transducer unit (30) is configured so that it can be mechanically fixed in any position relative to the insonification point (32) in order for the inspection setting to be reproducible,
- the ultrasound inspection device (20) comprises a cluster housing (34), which is divided into a transducer unit housing (28) and a contact body (26), wherein the contact body (26) adjoins the wear sole (22) and the transducer unit housing (28) contains the transducer unit (30) and is pivotable relative to the contact body (26),
- the wear sole (22) is configured such that a chamber (36) forms between the workpiece (24) and the transducer unit (30), and at least one fluid inlet channel (38), which, with a fluid inlet opening (40), opens into the chamber (36), and at least one fluid outlet channel (42) for venting and draining the chamber (36), which opens into the chamber (36), are provided, wherein the mouth of the fluid outlet channel (42) and the fluid outlet channel (42) are configured and disposed such that a filling process of the chamber (36) and of the fluid outlet channel (42) can be carried out starting on the outer lateral surface (25) of the workpiece (24), and then in a rising manner.

2. The ultrasound inspection device (20) according to claim 1, **characterized in that** the fluid inlet channel (38) and the fluid inlet opening (40) are configured and disposed such that the fluid is conducted perpendicularly onto the outer lateral surface (25) of the workpiece (24).

3. The ultrasound inspection device (20) according to claim 1 to 2, **characterized in that** the fluid outlet channel (42) comprises a fluid outlet opening (44) which, relative to the lateral surface (25), is disposed above a test probe (52) of the transducer unit (30).

4. The ultrasound inspection device (20) according to claim 3, **characterized in that** the fluid outlet channel (42) comprises a fluid outlet channel end (46) protruding from the cluster housing (34).

5. The ultrasound inspection device (20) according to any one of the claims 1 to 4, **characterized in that** several fluid inlet channels (38) are provided.

6. The ultrasound inspection device (20) according to any one of the claims 1 to 5, **characterized in that** several fluid outlet channels (42) are provided.

7. The ultrasound inspection device (20) according to any one of the claims 1 to 6, **characterized in that** the distance of the transducer unit (30) from the insonification point (32) can be changed by means of spacers that can be inserted into the cluster housing (34).

8. The ultrasound inspection device (20) according to any one of the claims 1 to 7, **characterized in that** the transducer unit (30) comprises several test probes (52).

9. The ultrasound inspection device (20) according to claim 8, **characterized in that** the chamber (36) has dimensions which permit a phased array inspection technique.

## Revendications

1. Dispositif de contrôle par ultrasons (20) pour le contrôle de pièces tubulaires (24), dans lequel
- le dispositif de contrôle par ultrasons (20) peut être couplé à la pièce (24) au moyen d'un milieu fluide de sorte que du son émis par une unité de transducteur (32) est incident sur un point d'entrée de son (32) sur la surface latérale (25) de la pièce (24),
- la pièce (24) et le dispositif de contrôle par ultrasons (20) peuvent être déplacés l'un par rapport à l'autre,
- l'unité de transducteur (30) peut pivoter sur une ligne de pivotement S-S qui correspond à un arc de cercle dont le centre est formé par le point d'entrée de son (32),
**caractérisé par le fait que**
- le dispositif de contrôle par ultrasons (20) comprend une semelle d'usure (22) configurée pour être posée sur la surface latérale extérieure (25) de la pièce (24) et se raccorder à celle-ci, dans lequel ladite semelle d'usure (22) est réalisée de manière à être échangeable de sorte que le dispositif de contrôle par ultrasons (20) est adaptable à des diamètres différents,
- l'unité de transducteur (30) est réalisée de manière à pouvoir être fixée mécaniquement dans toute position par rapport au point d'entrée de son (32), pour la reproductibilité du réglage de contrôle,
- le dispositif de contrôle par ultrasons (20) comprend un boîtier cluster (34) qui est divisé en un boîtier d'unité de transducteur (28) et en un corps de contact (26), dans lequel ledit corps de contact (26) se raccorde à la semelle d'usure (22) et ledit boîtier d'unité de transducteur (28) comprend l'unité de transducteur (30) et peut pivoter par rapport au corps de contact (26),
- ladite semelle d'usure (22) est réalisée de telle sorte qu'une chambre (36) se forme entre la pièce (24) et l'unité de transducteur (30), et au moins un canal d'introduction de fluide (38) qui débouche dans ladite chambre (36) par une ouverture d'introduction de fluide (40), ainsi qu'au moins un canal d'évacuation de fluide (42) destiné à évacuer l'air et l'eau de la chambre (36) et débouchant dans la chambre (36) sont prévus, dans lequel la bouche du canal d'évacuation de fluide (42) et le canal d'évacuation de fluide (42) sont réalisés et disposés de telle manière qu'un remplissage de la chambre (36) et du canal d'évacuation de fluide (42) peut se faire en commençant sur la surface latérale extérieure (25) de la pièce (24) et puis en montant.

2. Dispositif de contrôle par ultrasons (20) selon la revendication 1, **caractérisé par le fait que** le canal d'introduction de fluide (38) et l'ouverture d'introduction de fluide (40) sont réalisés et disposés de manière à ce que le fluide soit introduit perpendiculairement sur la surface latérale extérieure (25) de la pièce (24).

3. Dispositif de contrôle par ultrasons (20) selon la revendication 1 à 2, **caractérisé par le fait que** ledit canal d'évacuation de fluide (42) comprend une ouverture d'évacuation de fluide (44) qui est disposée, par rapport à la surface latérale (25), au-dessus d'un palpeur (52) de l'unité de transducteur (30).

4. Dispositif de contrôle par ultrasons (20) selon la revendication 3, **caractérisé par le fait que** le canal d'évacuation de fluide (42) présente une terminaison de canal d'évacuation de fluide (46) qui fait saillie dudit boîtier cluster (34).

5. Dispositif de contrôle par ultrasons (20) selon l'une quelconque des revendications 1 à 4, **caractérisé par le fait qu'**une pluralité de canaux d'introduction de fluide (38) est prévue.

6. Dispositif de contrôle par ultrasons (20) selon l'une quelconque des revendications 1 à 5, **caractérisé par le fait qu'**une pluralité de canaux d'évacuation de fluide (42) est prévue.

7. Dispositif de contrôle par ultrasons (20) selon l'une quelconque des revendications 1 à 6, **caractérisé par le fait que** la distance séparant ladite unité de transducteur (30) du point d'entrée de son (32) peut être modifiée à l'aide de pièces d'écartement qui peuvent être insérées dans le boîtier cluster (34).

8. Dispositif de contrôle par ultrasons (20) selon l'une quelconque des revendications 1 à 7, **caractérisé par le fait que** ladite unité de transducteur (30) comprend une pluralité de palpeurs (52).

9. Dispositif de contrôle par ultrasons (20) selon la revendication 8, **caractérisé par le fait que** ladite chambre (36) présente des dimensions qui permettent une technique de contrôle phased array.
